Europäisches Patentamt

European Patent Office

Office européen des brevets

(19)

(11) Publication number: **0 114 044**
**B1**

(12) **EUROPEAN PATENT SPECIFICATION**

(45) Date of publication of patent specification: **19.11.87**

(51) Int. Cl.⁴: **B 21 D 39/20, B 23 P 9/00**

(21) Application number: **84100058.1**

(22) Date of filing: **04.01.84**

(54) Method and apparatus for coldworking holes.

(30) Priority: **14.01.83 US 458282**

(43) Date of publication of application:
**25.07.84 Bulletin 84/30**

(45) Publication of the grant of the patent:
**19.11.87 Bulletin 87/47**

(84) Designated Contracting States:
**DE FR GB IT NL SE**

(56) References cited:
**DE-C-1 065 802**
**US-A-2 357 123**
**US-A-3 358 492**
**US-A-3 566 662**

(73) Proprietor: **West Coast Industries**
**1111 N. 92nd**
**Seattle, WA 98105 (US)**

(72) Inventor: **Hogenhout, Franciscus**
**21911 N.E. 1st**
**Redmond, WA 98052 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Courier Press, Leamington Spa, England.

## Description

The invention relates to a method for coldworking a hole as described in the introductory part of claim 1.

Such a method is known from US—A—3 566 662. With this known method a single operator can coldwork a hole from one side by first introducing the mandrel, which is solid and has a reduced diameter portion. The member for increasing the working diameter of the tapered portion relative to the hole is formed by a split sleeve which rests on the reduced diameter portion during entry into the hole. Then, the split sleeve is retained in the hole by the housing of a puller gun connected with the mandrel, while the larger diameter portion of the mandrel is pulled through the split sleeve.

This known and presently generally used method has the disadvantage that the operator must install a new sleeve each time a hole is worked, thereby losing time. Also, the sleeves are expensive and must be removed from the hole and discarded.

The invention has for its object to provide a method of the kind set forth above, which especially can be used in the manufacture of aeroplanes, and which eliminates the need for "throw away" pre-lubricated sleeves while producing fatigue performance as good as or better than the prior art.

This is achieved with the inventive method as characterized in the characterizing part of claim 1. As according to this method no separate sleeves are used and have to be handled, this method is much more economic. Because the pilot is cylindrical, the mandrel in its operative state, having the pilot inserted therein, can have a very accurately reproduceable working diameter, which is essential for consecutively coldworking a number of holes, to obtain a reliable reproducible result.

The invention further relates to and provides an apparatus for coldworking a hole in a workpiece as described in the introductory part of claim 3. An apparatus of this kind for producing pressure-tight tube and seat connections, is known from US—A—2 357 123. With this known apparatus the second portion of the pilot is tapered, as in operation, it must be pulled into the mandrel, while expansion of the tapered portion of the mandrel is restrained by a tube wall. The second portion of the pilot being tapered, the expanded diameter of the tapered portion of the mandrel is dependent on the ultimate axial position of the pilot. Because of wear and possible accumulation of dirt, the exact axial position of the pilot and, therefore, the exact expanded diameter of the mandrel cannot be guaranteed in all situations. This makes this known apparatus less suited for coldworking a hole to increase the fatigue life of the workpiece under stress, as the required high accuracy for that use is thus difficult to obtain.

The apparatus according to the invention as characterized in claim 3 eliminates this problem as the expanded diameter of the mandrel is virtually independent of the axial position of the pilot therein. The second portion of the pilot is cylindrical, and as with the method as described in claim 1, in use the pilot is retracted into the mandrel while the tapered portion thereof is outside the hole, and therefore in a relaxed state.

An apparatus as characterized in claim 5 will leave no ridges when coldworking a hole. Furthermore, while the offset is located in a recess portion, no scraping of the hole surface is produced.

These and other objects and advantages of the present invention will become more apparent from the following description taken in conjunctions with the accompanying drawings. In the drawings:

Figures 1 to 5 show sectional views depicting the relative positions of each of the concentric assemblies during coldworking operations.

Figure 6 is an enlarged view of the split mandrel nose, showing the offset split embodiment.

Figure 7 is a sectional view of the offset split mandrel viewed from the left through line 7—7 of Figure 6.

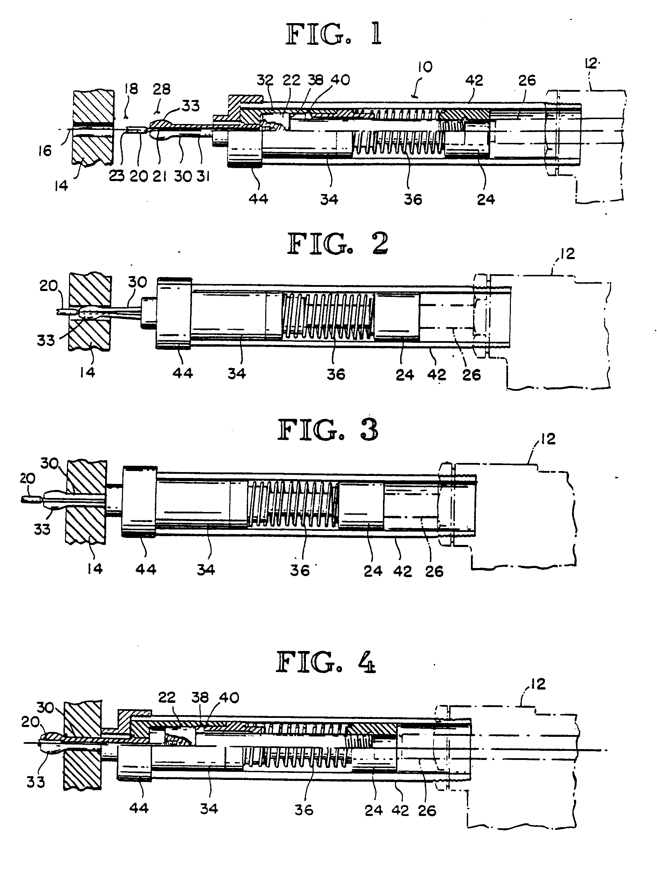

Referring to Figure 1, a split mandrel hole expanding tool assembly, generally designated as 10, is shown. The assembly 10 is mounted to puller gun 12. A workpiece 14 having a hole 16 to be coldworked is shown to the left of the assembly 10. Hole 16 is of such a diameter that pulling the split mandrel assembly 10 through it will cause coldworking.

The tool assembly 10 contains a pilot assembly, generally designated as 18, which has a pilot 20, a rod 22, and a coupler 24. Pilot 20 has a small diameter portion 21 contained within the tool assembly 10, and a large diameter portion 23 extending outside of the tool assembly 10 prior to operation of the tool. The pilot 20 is threaded to the rod 22 which in turn is threaded to coupler 24. Coupler 24 is also threaded to the puller ram 26 of puller gun 12. The puller ram 26 of puller gun 12 transports left and right taking the pilot assembly 18 with it.

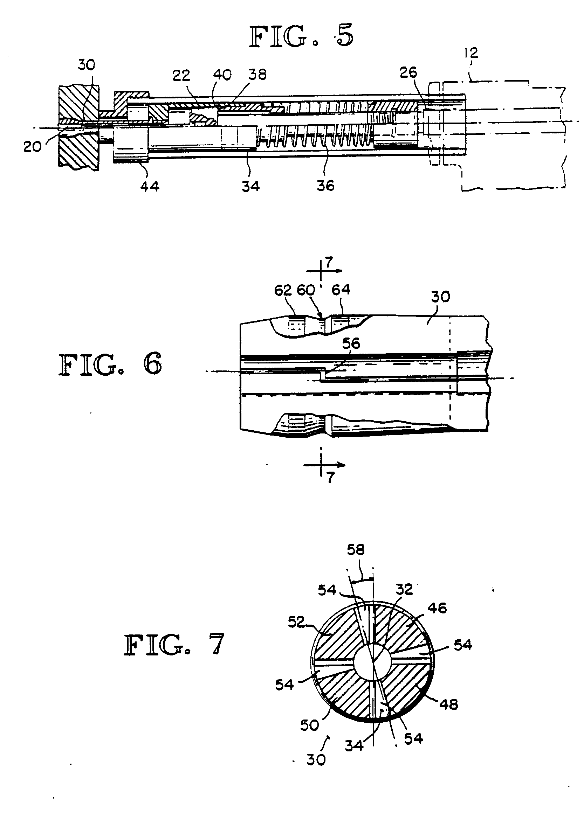

The tool assembly 10 also contains a split mandrel assembly, generally designated as 28, which consists of split mandrel 30, housing 32, plug 34, and spring 36. Split mandrel 30 has a straight portion 31 and a flared portion 33 which is adapted to receive the pilot 20. Split mandrel 30 is threaded to housing 32, which in turn is threaded to plug 34. Spring 36 is located between coupler 24 of the pilot assembly 18, and plug 34 of the mandrel assembly 28. Spring 36 biases the mandrel assembly 28 to the left by pushing on coupler 24 which is secured to puller ram 26. The mandrel assembly 28 is extended due to this bias. Rod 22 has a shoulder 38 which contacts another should 40 of plug 34 of the mandrel assembly during retraction as best shown in Figure 5. This contact enables the pilot assembly 18 and mandrel assembly 28 to travel in unison to the right during retraction.

Pilot assembly 18 and mandrel assembly 28 are contained partially within a barrel 42. Barrel 42 is fixedly attached to the puller gun 12 at one end and a cap 44 at the other end. The cap 44 retains the mandrel assembly 28 in barrel 42 and serves as a guide for coupler 24 of pilot assembly. The barrel 42 also contains spring 36 and guides it during operation.

Referring now to Figures 6 and 7, an embodiment of split mandrel assembly 28 is shown wherein mandrel 30 has four segments designated as segments 46, 48, 50 and 52 with an offset split 54 between each segment. Figure 6 shows the offset 56 of offset split 54. The offset split 54 is accomplished by sweeping a split cut through an angle 58 (Figure 7) about the longitudinal axis of mandrel 30. It should be noted that offset 56 of offset split 54 is located in a recessed diameter portion 60 of mandrel 30. Recessed diameter portion 60 of mandrel 30 is located between coldworking diameter portions 62 and 64 of mandrel 30. Located offset 56 of offset split 54 in recessed diameter portion 60 of mandrel 30 between coldworking diameter portions 62 and 64 provides a means of pulling two coldworking diameter portions through one hole in succession with each portion having a different radial location for its split. The result of this configuration will be that the coldworked hole 16 will have a clean bore with no ridges or extraneous marks from offset 56 or offset split 54. The present invention may also be practiced without an offset split 54. The mandrel 30, in this case, would still be divided into four segments similar to segments 46, 48, 50 and 52 in Figure 7, but it would have no offset. As this type of mandrel is retracted through hole 16 in workpiece 14, small ridges would occur at four radial locations. These ridges could be reamed after coldworking.

To operate the tool an operator would place pilot 20 and mandrel 30 into hole 16 of workpiece 14 until the cap 44 contacts the surface of workpiece 14 as shown in Figures 2 and 3. As contact between cap 44 and workpiece 14 is maintained, retraction of puller ram 26 of puller gun 12 can be initiated. This retraction operation would normally be accomplished by activation of a trigger (not shown) located in puller gun 12. The puller ram 26 which is fastened to pilot 20 via rod 22 and coupler 24 will cause pilot 20 to retract engaging the pilot 20 in the flared portion 33 of mandrel 30 as shown in Figure 4.

## Claims

1. A method for coldworking a hole (16) in a workpiece (14) to increase the fatigue life of that workpiece under stress comprising:

inserting a mandrel (28) through the hole (16), said mandrel (28) comprising a straight portion (31) and a tapered portion (33), said tapered portion extending from said straight portion (31) and being of larger diameter than said straight portion (31),

applying a member (20) to increase the working diameter of the tapered portion (33) relative to the hole (16), and retracting the tapered portion (33) of the mandrel (28) through the hole (16), thereby causing the hole (16) to be coldworked,

characterized in that

a mandrel (30) having a longitudinally split, collapsible tapered portion (33) is used, which in the collapsed state is inserted through the hole (16); and

the working diameter of the tapered portion (33) is increased by inserting a cylindrical pilot (20) into the split mandrel (30), while the tapered portion is outside the hole to be coldworked.

2. The method of claim 1 wherein said mandrel (30) and said pilot (20) are both in longitudinal tensile stress during retraction from the hole (16).

3. Apparatus (10) for coldworking a hole (16) in a workpiece (14) comprising a mandrel (28) having a straight portion (31) and a tapered portion (33), said tapered portion extending from said straight portion (31) and being of larger diameter than said straight portion (31),

the mandrel (30) having at least two radially directed slots in the tapered portion (33), defining at least two segments of the mandrel to permit changing of the outer diameter of the mandrel, and an axially directed slot through said mandrel;

a pilot (20) having a first portion (21) disposed within the axially directed slot of said mandrel, and a second portion (23) extending from said first portion and being of larger diameter than said first portion;

retracting means (12) connected to the pilot for pulling said pilot with said second portion (23) into said mandrel and retracting said mandrel through said hole; and

stopping means connected to said pilot and mandrel for stopping the second portion (23) of said pilot at the point of full engagement within the tapered portion (33) of said mandrel (30) as said pilot (20) is pulled into said mandrel;

characterized by

said second portion (23) of said pilot being cylindrical;

said retracting means (12) being also connected to said mandrel and capable of pulling the cylindrical portion (23) of said pilot (20) into the tapered portion (33) of said mandrel (30), thereby engaging said stopping means, before retracting the mandrel (30) and pilot in unison through the hole (16).

4. The apparatus of claim 3 characterized in that said mandrel (30) contains four radially directed slots (54) defining four segments (46, 48, 50, 52) of the mandrel.

5. The apparatus of claim 4 characterized in that said mandrel (30) contains a recessed diameter portion (60) said recessed diameter portion (60) being located between two coldworking diameter portions (62, 64) of said mandrel, and having an offset split (54) so that the outside surface of each of said coldworking diameter portions (62, 64) of said mandrel (30) each contacts a different radial location of the coldworked hole as said mandrel (30) is retracted from the hole.

## Patentansprüche

1. Verfahren zur Kaltbearbeitung einer Bohrung (16) in einem Werkstück (14), um die Dauerfestigkeit des Werkstückes unter Spannung zu erhöhen, mit folgenden Verfahrensschritten:
— Einführen eines Dorns (28) durch die Bohrung (16), wobei der Dorn (28) einen geraden Abschnitt (31) und einen kegelig zulaufenden Abschnitt (33) enthält, der sich von dem geraden Abschnitt (31) aus erstreckt und einen größeren Durchmesser als dieser aufweist,
— Anwenden eines Teiles (20), um den Arbeitsdurchmesser des kegelig zulaufenden Abschnittes (33) bezüglich der Bohrung (16) zu vergrößern und
— Zurückziehen des kegelig zulaufenden Abschnittes (33) des Dorns (28) durch die Bohrung (16), wodurch die Bohrung (16) kaltbearbeitet wird,
dadurch gekennzeichnet, daß
— ein Dorn (30) verwendet wird, der einen in Längsrichtung gespaltenen, zusammendrückbaren kegelig zulaufenden Abschnitt (33) aufweist, der im zusammengedrückten Zustand in die Bohrung (16) eingeführt wird, und
— der Arbeitsdurchmesser des kegelig zulaufenden Abschnittes (33) durch Einführen eines zylindrischen Zapfens (20) in den gespaltenen Dorn (30) vergrößert wird, während der kegelig zulaufende Abschnitt sich außerhalb der kalt zu bearbeitenden Bohrung befindet.

2. Verfahren nach Anspruch 1, wobei der Dorn (30) und der Zapfen (20) beide unter längsgerichteter Zugspannung während des Zurückziehens aus der Bohrung (16) stehen.

3. Vorrichtung (10) zur Kaltbearbeitung einer Bohrung (16) in einem Werkstück (14) mit
— einem Dorn (28), der einen geraden Abschnitt (31) und eine kegelig zulaufenden Abschnitt (33) aufweist, der sich vom geraden Abschnitt (31) aus erstreckt und einen größeren Durchmesser als dieser aufweist, wobei der Dorn (30) zumindest
— — zwei radial gerichtete Schlitze im kegelig zulaufenden Abschnitt (33) aufweist, die zumindest zwei Segmente des Dornes definieren, um eine Änderung des Außendurchmessers des Dornes zu erlauben und
— — einen axial gerichteten Schlitz durch den Dorn enthält,
— einem Zapfen (20), der
— — einen ersten, innerhalb des axial gerichteten Schlitzes des Dornes angeordneten Abschnitt (21) und
— — einen zweiten, sich von diesem ersten Abschnitt aus erstreckenden Abschnitt (23) enthält, der einen größeren Durchmesser als der erste Abschnitt aufweist,
— einer Zugvorrichtung (12), die mit dem Zapfen verbunden ist, um diesen mit dem zweiten Abschnitt (23) in den Dorn hineinzuziehen und den Dorn durch die Bohrung zurückzuziehen und
— Anschlagmitteln, die mit dem Zapfen und dem Dorn verbunden sind, um den zweiten Abschnitt (23) des Zapfens anzuhalten, wenn sich dieser beim Hineinziehen des Zapfens (20) in den Dorn in vollständigem Eingriff mit dem kegelig zulaufenden Abschnitt (33) des Dornes (33) befindet,
dadurch gekennzeichnet, daß
— der zweite Abschnitt (23) des Zapfens zylindrisch geformt ist und
— die Zugvorrichtung (12) auch mit dem Dorn verbunden und in der Lage ist, den zylindrischen Abschnitt (23) des Zapfens (20) in den kegelig zulaufenden Abschnitt (23) des Dornes (30) zu ziehen, wobei die Anschlagmittel beaufschlagt werden, bevor der Dorn (30) und der Zapfen gleichzeitig durch die Bohrung (16) zurückgezogen werden.

4. Vorrichtung nach Anspruch 3, dadurch gekennzeichnet, daß der Dorn (30) vier radial gerichtete Schlitze (54) enthält, die vier Segmente (46, 48, 50, 52) des Dornes definieren.

5. Vorrichtung nach Anspruch 4, dadurch gekennzeichnet, daß der Dorn (30) einen im Durchmesser verjüngten Abschnitt (60) enthält, der zwischen zwei kaltbearbeitenden Durchmesserabschnitten (62, 64) des Dornes angeordnet ist und einen abgekröpften Spalt (54) aufweist, so daß die äußere Oberfläche jeder der kaltbearbeitenden Durchmesserabschnitte (62, 64) des Dornes (30) jeweils mit einer unterschiedlichen Radialstelle der kaltbearbeiteten Bohrung in Kontakt steht, wenn der Dorn (30) aus der Bohrung zurückgezogen wird.

## Revendications

1. Procédé pour former à froid un trou (16) dans une pièce (14) en vue d'accroître la résistance à la fatigue de cette pièce sous contrainte, consistant à:
— insérer un mandrin (28) à travers le trou (16), ledit mandrin (28) comprenant une partie rectiligne (31) et une partie conique (33), ladite partie conique s'étendant à partir de ladite partie rectiligne (31) et étant de plus grand diamètre que ladite partie rectiligne (31),
— appliquer un élément (20) pour augmenter, par rapport au trou (16), le diamètre travaillant de la partie conique (33) et tirer la partie conique (33) du mandrin (28) à travers le trou (16), en provoquant ainsi le formage à froid du trou (16),
caractérisé en ce que:
— on utilise un mandrin (30) possédant une partie conique (33) fendue longitudinalement et capable de se resserrer, que l'on insère à travers le trou (16) dans l'état resserré; et
— on augmente le diamètre travaillant de la partie conique (33) en insérant un pilote cylindrique (20) dans le mandrin fendu (33) alors que la partie conique se trouve à l'extérieur du trou à former à froid.

2. Procédé selon la revendication 1, dans lequel le mandrin (30) et le pilote (20) sont tous deux sous une contrainte de traction longitudinale pendant qu'on les retire du trou (16).

3. Appareil (10) pour former à froid un trou (16) dans une pièce (14), comprenant un mandrin (28) qui possède une partie rectiligne (31) et une partie conique (33), ladite partie conique partant de ladite partie rectiligne (31) et étant de plus grand diamètre que ladite partie rectiligne (31),

—le mandrin (30) ayant au moins deux fentes orientées radialement dans la partie conique (33) pour définir au moins deux segments du mandrin pour permettre de modifier le diamètre extérieur du mandrin, et une fente orientée axialement à travers ledit mandrin;

— un pilote (20) ayant une première partie (21) disposée dans la fente orientée axialement dudit mandrin, et une deuxième partie (23) qui part de ladite première partie et de plus grand diamètre que ladite première partie;

— des moyens de retrait (12) reliés au pilote pour tirer ledit pilote, avec ladite deuxième partie (23), dans ledit mandrin et pour tirer ledit mandrin à travers ledit trou; et

— des moyens d'arrêt reliés audit pilote et audit ·mandrin pour arrêter la deuxième partie (23) dudit pilote dans sa position d'engagement total dans la partie conique (33) dudit mandrin (30) lorsque ledit pilote (20) est tiré dans ledit mandrin, caractérisé en ce que:

— ladite deuxième partie (23) dudit pilote est cylindrique;

— lesdits moyens de retrait (12) sont eux aussi reliés audit mandrin et capables de tirer la partie cylindrique (23) dudit pilote (20) dans la partie conique (33) dudit mandrin (30) en mettant ainsi lesdits moyens d'arrêt en prise avant de tirer le mandrin (30) et le pilote conjointement à travers le trou (16).

4. Appareil selon la revendication 3, caractérisé en ce que ledit mandrin (30) présente quatre fentes (54) orientées radialement qui définissent quatre segments (46, 48, 50, 52) du mandrin.

5. Appareil selon la revendication 4, caractérisé en ce que ledit mandrin (30) comprend une partie de diamètre réduit (60), ladite partie de diamètre réduit (60) étant située entre deux parties de diamètre de formage à froid (62, 64) dudit mandrin, et ayant une fente en gradin (54), de sorte que la surface externe de chacune desdites parties de diamètre de formage à froid (62, 64) dudit mandrin (30) entre en contact avec un point radial différent du trou formé à froid lorsqu'on tire ledit mandrin (30) hors du trou.

# FIG. 1

# FIG. 2

# FIG. 3

# FIG. 4

# FIG. 5

# FIG. 6

# FIG. 7